## Europäisches Patentamt

## European Patent Office

## Office européen des brevets

(11) Veröffentlichungsnummer: **0 139 781**

**B1**

## EUROPÄISCHE PATENTSCHRIFT

(45) Veröffentlichungstag der Patentschrift:
**22.07.87**

(51) Int. Cl.⁴: **B 25 J 11/00**, B 23 Q 7/00

(21) Anmeldenummer: **83110836.0**

(22) Anmeldetag: **28.10.83**

(54) **Handhabungsgerät.**

(43) Veröffentlichungstag der Anmeldung:
**08.05.85 Patentblatt 85/19**

(45) Bekanntmachung des Hinweises auf die Patenterteilung:
**22.07.87 Patentblatt 87/30**

(84) Benannte Vertragsstaaten:
**AT CH DE FR GB IT LI SE**

(56) Entgegenhaltungen:
**EP-A-0 021 972**
**DE-A-3 207 698**
**US-A-2 679 940**
**US-A-3 482 711**
**US-A-3 811 320**
**US-A-4 166 527**

(73) Patentinhaber: **Fürstlich Hohenzollernsche Hüttenverwaltung Laucherthal, Laucherthal, D-7480 Sigmaringen (DE)**

(72) Erfinder: **Der Erfinder hat auf seine Nennung verzichtet**

(74) Vertreter: **Schwabe, Hans- Georg, Dipl.- Ing., Patentanwälte Schwabe, Sandmair, Marx Stuntzstrasse 16, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER. STOCKHOLM 1987

## Beschreibung

Die Erfindung betrifft ein Handhabungsgerät gemäß dem Oberbegriff des Anspruchs 1.

Derartige Handhabungsgeräte dienen dazu, Objekte wie zum Beispiel Werkstücke, aber auch Arbeitsköpfe für Maschinen oder Werkzeugeinheiten, von einer Stelle zur anderen zu transportieren. Sie sind trotz des unter Umständen im Prinzip ähnlichen Aufbaus nicht mit Verladebrücken zu verwechseln, die wesentlich größer dimensioniert sind und dem Transport großer Lasten dienen. Demgegenüber sind die Handhabungsgeräte, die die Erfindung verbessern will, in der Industrie für Objekte in Verwendung, deren Gewicht normalerweise unter einer Tonne, meist auch unter hundert Kilogramm, liegt. Sie können auch zum Halten von Werkzeugmaschinen, wie z.B. Bohrmaschinen, während der Arbeit eingesetzt werden.

Diese durch die Erfindung zu verbessernden Handhabungsgeräte sind normalerweise motorisch angetrieben, wenn sie auch dem Grunde nach von Hand antreibbar sind. In vielen Fällen besitzen sie eine automatische Steuerung, sodaß das Handhabungegerät seinen gesamten Arbeitsablauf, also beispielsweise den Ersatz eines Werkzeugkopfes an einer Werkzeugmaschine durch einen anderen Werkzeugkopf, vollständig automatisch durchführen kann. Ebenso können derartige Handhabungsgeräte natürlich zum Zu- und Abführen beispielsweise von Werkstücken bei Werkzeugmaschinen dienen.

Die Handhabungsgeräte können je nach Verwendungszweck ein- oder mehrdimensionale Bewegungen durchführen. Im einfachsten Falle führen sie ausschließlich eine eindimensionale Bewegung durch. In diesem Falle trägt die zum Beispiel auf einer vertikalen oder horizontalen Stange verschiebbare Verschiebereinheit mittels entsprechender die Aufnahme bildender Greifmittel beispielsweise ein Werkstück von einer Position zu einer anderen. Das Gerät kann auch zweidimensional arbeiten. In diesem Falle kann beispielsweise die Verschiebeeinheit horizontal verschiebbar sein und eine vertikal auf und nieder bewegbare Aufnahme tragen. Eine andere mehr verbreitete Einsatzmöglichkeit liegt in der Ausbildung mit einer Verschiebeeinheit, in welcher im rechten Winkel zur Stange eine zweite vorzugsweise horizontale Querstange angeordnet ist, die motorisch angetrieben in der Verschiebeeinheit bewegbar ist. Auf diese Weise kann das Handhabungsgerät eine ebene Fläche überstreichen. Am Ende der Querstange kann dann die Aufnahme beispielsweise starr oder auch vertikal auf und nieder bewegbar angeordnet sein. Die Aufnahme kann auch schwenkbar an der Verschiebeeinheit oder am Ende der Querstange sitzen. Vorzugsweise bei Vertikalanordnung der Stange kann diese auch um ihre Achse drehbar sein. Außer vertikaler und horizontaler Anordnung sind auch schräge Anordnungen möglich.

Im Hinblick darauf, daß Handhabungsgeräte der oben skizzierten Art in der Industrie breite immer weiter wachsende Anwendung finden, hesteht ein erheblicher Bedarf darin, diese Handhabungsgeräte besonders leicht und damit mit geringem Herstellungsaufwand zu bauen.

Die Erfindung will daher ein solches Handhabungsgerät wesentlich leichter und damit mit geringerem Gestehungsaufwand als nach den Grundsätzen des klassischen Maschinenbaues ausbilden. Sie geht zu diesem Zweck zunächst davon aus, daß die verschiedenen das Gerät bildenden Elemente jeweils so leicht wie möglich ausgebildet werden. Insbesondere will die Erfindung das Ziel des Leichtbaus durch Zulassung erheblicher Verformungen im Gerät erreichen.

Dementsprechend ist das Gerät nach der Erfindung in seiner einfachsten Ausführung gemäß den kennzeichnenden Merkmalen des Anspruchs 1 weitergebildet. Auf diese Weise wird es ermöglicht, die Stange wesentlich leichter auszubilden, als dies bei angenähert starrer Ausbildung nötig wäre. Dadurch, daß erhebliche Durchbiegungen der Stange zugelassen werden, tritt natürlich in der Verschiebeeinheit insofern ein Problem auf, als dann die Führungselemente der Verschiebeeinheit, in welchen die Stange läuft, nicht mehr mit der entsprechend den Betriebsbelastungen gebogenen Stange fluchten. Diese Problematik wird bei der Erfindung dadurch beseitigt, daß die Brücke selbst flexibel nachgibt, so daß sich jedes Führungselement der Verschiebeeinheit an die Durchbiegung der Stange anpassen kann. Die Länge der einzelnen Führungselemente ist dabei ausreichend kurz gewählt, um die Durchbiegung der Stange innerhalb des einzelnen Führungselementes vernachlässigen bzw. durch Fertigungstoleranzen und normale Minimalverformungen aufnehmen zu können.

Durch die geringe Dimensionierung der Stange wird nicht nur diese leicht. Dadurch wird wiederum eine geringere Dimensionierung der Verschiebeeinheit ermöglicht, wodurch die von der Stange zu tragenden Gewichte wiederum niedrig bleiben. Auf letzteres wirkt sich auch die Tatsache aus, daß damit die Antriebsenergie für als Beschleunigungen der Verschiebeeinheit verringert wird, was wiederum zu einer kleineren Auslegung des Antriebs führt und für die besonders leichte Ausbildung der Stange selbst entsprechende Rückwirkungen hat.

Wenn hier von einer Stange gesprochen wird, so muß diese Stange nicht notwendig Kreisprofil haben. Sie kann dem Grunde nach ein beliebiges Profil haben, das auch hohl sein kann. Bevorzugt hat die Stange jedoch - unabhängig davon, ob auf ihr die Verschiebeeinheit wandert oder ob diese eine in ihr verschiebbare Stange trägt - das Profil eines Kreises, wobei zur drehsicheren Führung von Verschiebeeinheit und Stange ineinander eine Rippe auf der Stange verläuft. Im einfachsten Falle hat also die Stange das Profil einer eine Längsfeder aufweisenden Welle. Wenn auch die Querstange bevorzugt im rechten Winkel zur die Verschiebeeinheit tragenden Stange verläuft, so kann in manchen Fällen auch die Querstange unter einem von 90° abweichenden Winkel zur die Verschiebeeinheit tragenden Stange verlaufen.

Die Anwendung der Erfindung auf ein Gerät nach dem Oberbegriff des Anspruchs 2 ist im Anspruch 2 gekennzeichnet.

Dem Grunde nach kann beispielsweise die Führungsanordnung für die Querstange oder eine Vertikalführung für die Aufnahme von einem der beiden Führungselemente, die auf der Stange gleiten, getragen sein. Dies belastet jedoch ein derartiges Führungselement besonders stark. Ferner besteht die Möglichkeit, daß die Führung für die Querstange oder sonstige Tragelemente für das Objekt - z.B. so, wie im Ausführungsbeispiel die Motoren gleichmäßig an beiden Führungselementen der Verschiebeeinheit aufgehängt sind. Bevorzugt ist die Ausbildung jedoch gemäß Anspruch 3 getroffen. Das verteilt die Belastung gleichmäßig auf beide Führungselemente und vereinfacht den konstruktiven Aufbau.

Die Brücke ist vorzugsweise gemäß Anspruch 4 als ebene Platte ausgebildet. Diese Platte muß so bemessen sein, daß sie sich unter Last noch in einem der Durchbiegung der die Verschiebeeinheit tragenden bzw. von der Verschiebeeinheit getragenen Stange entsprechenden Maß durchbiegt. Dieses Maß ist einfach rechnerisch zu ermitteln. Die Biegsamkeit der Platte kann durch dünne Ausbildung und/oder entsprechende Umrißgestaltung in der Draufsicht bewirkt sein. Zweckmäßig erstreckt sich die Platte parallel zur Stange.

Die konstruktive Ausbildung wird besonders einfach, wenn gemäß Anspruch 5 von der Brücke die Führungselemente tragende Arme abragen. Mit diesen Armen können die Führungselemente beispielsweise verschraubt sein.

Bevorzugt ergänzen gemäß Anspruch 6 die Arme den Umriß der Brücke zu einem langgestrekten Rechteck (wenn die Verschiebeeinheit keinen zweiten Satz von Führungselementen für eine Querstange trägt) bzw. einem Kreuz (wenn die Verschiebeeinheit einen zweiten Satz von Führungselementen für eine Querstange aufweist). Soll die Platte besonders biegeweich sein, so kann auch der mittlere die Arme tragende Teil der Brücke bereits Kreuzform haben.

Bei der bevorzugten Ausführungsform der Erfindung, bei welcher die Stange und gegebenenfalls die Querstange Kreisprofil mit einer Längsrippe aufweisen, laufen die Längswälzlager vorteilhaft auf dem Kreisprofil, während wälzgelagerte Rollen an den Flanken der Rippe laufen.

Führungselemente, wie sie die Erfindung verwendet, sind beispielsweise aus der deutchen Gebrauchsmusterschrift 80 05 491 bekannt. Die bekannten Führungselemente sind jedoch insofern problematisch, als sie nicht in Form eines geschlossenen Ringes die Stange umgeben, sondern im Bereich der Rippe der Stange offen und damit in Umfangsrichtung nachgiebig sind. Die Erfindung bevorzugt daher eine Ausbildung gemäß Anspruch 7. In konstruktiver Hinsicht und festigkeitsmäßig ist die Ausbildung gemäß Anspruch 8 und 9 besonders günstig. Diese erlaubt nämlich eine Feineinstellung der wälzgelagerten Rollen, so daß diese praktisch spielfrei an der Längsrippe der Stange laufen.

Zur Sicherung der eingestellten Position der Exzenterachsen für die wälzgelagerten Rollen sind die Exzenterachsen der Rollen vorzugsweise gemäß Anspruch 10 in der eingestellten Drehlage arretierbar, beispielsweise mit Hilfe von entsprechenden Klemmschrauben.

In der Praxis wird man eine Ausbildung gemäß Anspruch 11 bevorzugen. Diese ist konstruktiv vorteilhaft, einfach und kann wegen der Vereinigung des Elektromotors mit der Verschiebeeinheit besonders leicht ausgebildet werden.

Vorzugsweise ist gemäß Anspruch 12 das Untersetzungsgetriebe mit dem Motor zusammengeflanscht und als Planetengetriebe ausgebildet.

Die Zahnstange ist vorzugsweise gemäß Anspruch 13 auf der dem Kreisprofil abgewandten Seite der Rippe vorgesehen.

Die Ausbildung gemäß Anspruch 14 ist besonders günstig, da bei ihr durch die Anordnung des Antriebs keine besondere zusätzliche Versteifung der Verschiebeeinheit bewirkt wird.

Die Längswälzlager sind vorteilhaft gemäß Anspruch 15 ausgebildet. Hierbei erlauben die Klemmschrauben eine sehr genaue Einstellung des Laufspiels zwischen dem jeweiligen Längsführungselement und der Stange. Mit Ausnahme der Feineinstelleinrichtung für die Lagerkörper ist die Ausbildung des Längswälzlagers dem Grund nach aus der Deutschen Gebrauchsmusterschrift 80 05 491 bekannt.

Soll die Querstange an ihrem Ende eine vertikal verschiebbare Aufnahme, beispielsweise einen Greifer für ein Werkstück, eine Werkzeugeinheit oder was dergleichen mehr ist, tragen, so ist das Gerät vorzugsweise gemäß Anspruch 16 ausgebildet. Das verteilt die von der Querstange zu tragenden Gewichte vorteilhaft und verringert das auf die Stange wirkende diese zu drehen bestrebte Drehmoment.

Bei der Erfindung bestehen die verschiedenen Gehäuseteile der Verschiebeeinheit sowie Motorengehäuse und dergleichen vorteilhaft aus Leichtmetall. Die Stange und die Querstange bestehen jedoch vorzugsweise aus Stahl. Die Stangen können auch hohl ausgebildet sein. Eine hohle Ausbildung gibt der Stange eine große Biegesteifigkeit, hat jedoch den Nachteil, daß die Führungselemente relativ groß dimensioniert werden müssen.

Nachfolgend ist die bevorzugte Ausführungsform der Erfindung als erläuterndes Ausführungsbeispiel anhand der Zeichnungen beschrieben.

Fig. 1 zeigt stark schematisiert das Handhabungsgerät in perspektivischer Darstellung;

Fig. 2 zeigt zum Teil geschnitten die Ansicht in Richtung des Pfeiles x auf das Gerät nach Fig. 1;

Fig. 3 zeigt die Verschiebeeinheit gemäß Fig. 1, ebenfalls in Richtung des Pfeiles X gesehen, teilweise im Schnitt;

Fig. 4 zeigt die Ansicht von rechts auf die Verschiebeeinheit gemäß Fig. 1, ebenfalls zum Teil im Schnitt;

Fig. 5 zeigt gegenüber Fig. 3 und 4 in vergrößertem Maßstab einen Schnitt durch ein Führungselement der Verschiebeeinheit, wobei der Schnitt in einer Normalebene zu der das Führungselement tragenden Stange verläuft.

Fig. 6 zeigt in anderem Maßstab die Ansicht auf eine besonders einfache Ausführungsform der Verschiebeeinheit bei welcher keine Querstange vorgesehen und die Objektaufnahme nicht dargestellt ist.

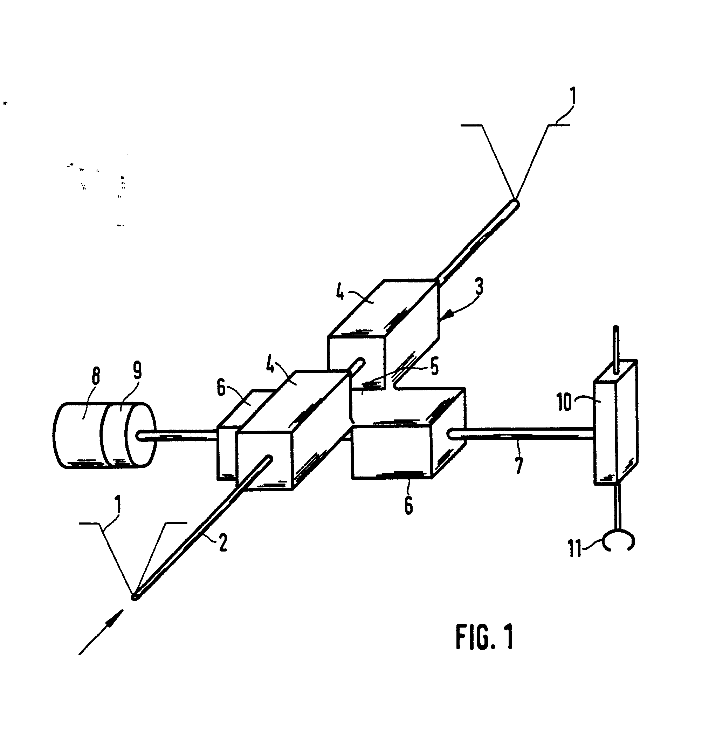

Das in Fig. 1 bis 5 gezeigte Handhabungsgerät ist mittels zweier Hängeböcke 1 an beispielsweise der Decke einer Werkstatt aufgehängt. Die beiden Hängeböcke 1 tragen eine horizontale Stange 2, auf welcher die Verschiebeeinheit 3 längsverschiebbar aber nicht drehbar mittels zwei auf der Stange 2 längsverschiebbarer Führungselemente 4 geführt ist, die im Abstand voneinander angeordnet und durch eine von einer flachen Platte gebildete Brücke 5 miteinander verbunden sind. Die Brücke 5 bildet zugleich die Brücke für zwei weitere Führungselemente 6, die ebenfalls axial im Abstand voneinander angeordnet sind und längsverschiebbar eine sich rechtwincklig zur Stange 2 erstreckende horizontale Querstange 7 tragen. Die Antriebsmotoren zum Bewegen der Verschiebeeinheit 3 auf der Stange 2 und der Querstange 7 in den Führungselementen 6 sind in Fig. 1 der Übersichtlichkeit halber nicht dargestellt. Das Gleiche gilt für die Antriebsmechanismen.

Wie aus Fig. 1 ersichtlich, trägt die Querstange 7 an ihrem linken Ende einen Elektromotor 8 mit Untersetzungsgetriebe 9. Vom Untersetzungsgetriebe läuft durch die hohl ausgebildete Querstange 7 eine Antriebswelle zu einer Vertikalbewegungseinheit 10, in welcher als Aufnahme ein Objektgreifer 11 auf und nieder bewegbar angeordnet ist.

Aus der Beschreibung anhand der Fig. 1 erkennt man, daß die Verschiebeeinheit 3 mit der Querstange 7 längs der Stange 2 verschoben werden kann, während die Querstange 7 im rechten Winkel zur Stange 2 in einer vorzugsweise horizontalen Ebene verschoben werden kann. Auf diese Weise kann die Objektaufnahme 11 eine rechteckige Fläche vollständig überstreichen, wobei zusätzlich die Objektaufnahme 11 auch noch auf und nieder bewegt werden kann. Alle Antriebe erfolgen elektromotorisch, sie können vollautomatisch gesteuert sein. Die entsprechenden Speise- und Steuerleitungen sind in den Zeichnungen nicht dargestellt; sie hängen vorteilhaft lose unter den Stangen 2 und 7. Sie können aber auch auf federbelastete Rollen aufgewickelt sein, so daß sie ständig straff parallel zu den Stangen 2 und 7 verlaufen. Die Rollen sind dann ebenfalls vorteilhaft von der Verschiebeeinheit 3 getragen.

Die die Verschiebeeinheit 3 tragende Stange 2 ist massiv ausgebildet. Sie hat Kreisprofil und trägt eine Rippe 2a, die in ihrem Ansatz an den Kreisprofilteil der Stange 2 von radialen Flanken begrenzt ist, während sie im Abstand vom Kreisprofilteil der Stange 2 von parallelen vertikal verlaufenden Flanken begrenzt ist. an diesen parallelen Flanken laufen die später im Einzelnen zu beschreibenden Führungsrollen 14. An der oberen Stirnfläche der Rippe 2a ist eine Verzahnung 16 vorgesehen, in welche ein später im Einzelnen zu beschreibendes Antriebsritzel 17 eingreift.

Die verhältnismäßig schlank und damit durchbiegsam ausgebildete Stange 2 trägt also praktisch das ganze Handhabungsgerät.

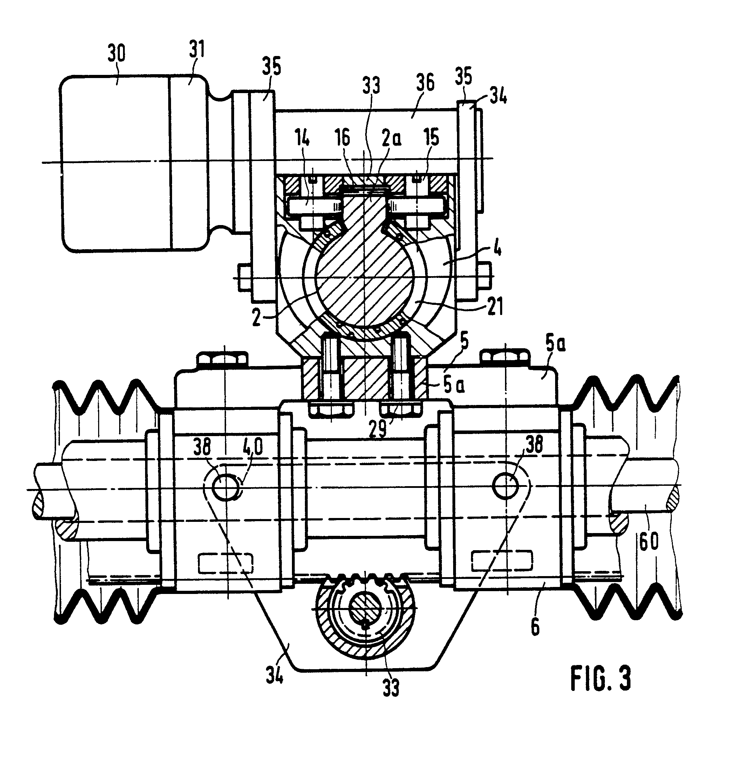

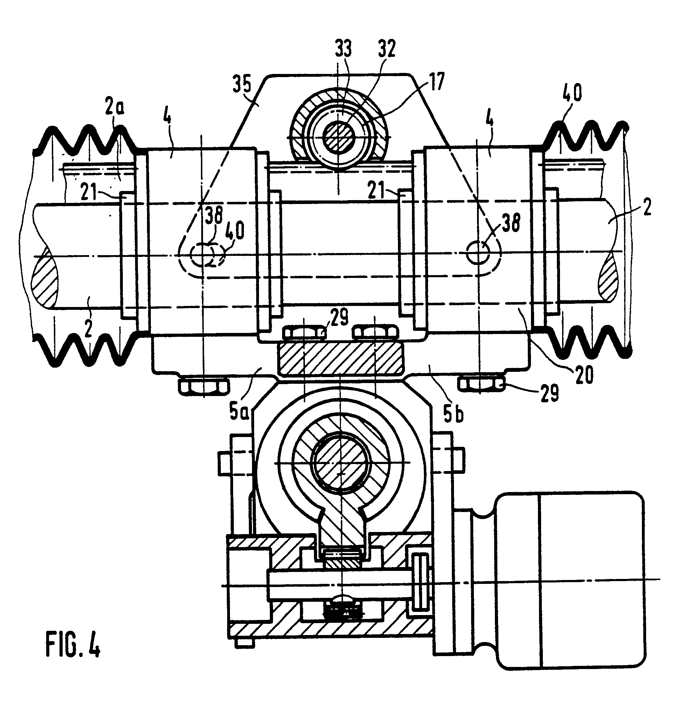

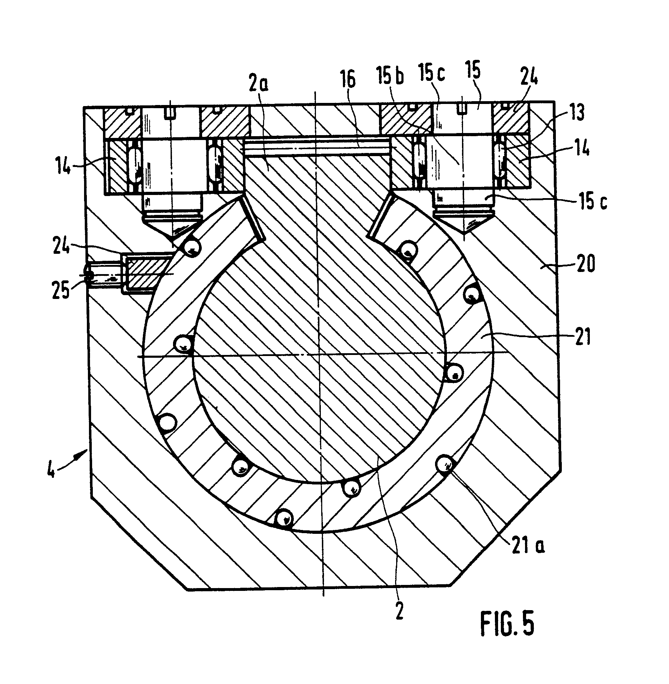

Die Verschiebeeinheit 3 besitzt als zentrales Bauelement die Brücke 5, die im wesentlichen von einer kreuzförmigen Leichtmetallplatte gebildet ist. Die Leichtmetallplatte besteht aus einem zentralen etwa quadratischen Teil, an welches vier Arme 5a anschließen, deren jeder in etwa den gleichen quadratischen Umriß wie der zentrale Teil besitzt. Die beiden in Fig. 3 senkrecht zur Zeichenebene verlaufenden Arme 5a, die in Fig. 4 in der Zeichenebene verlaufen, tragen mittels Schrauben 29 axial im Abstand voneinander die beiden auf der Stange 2 gleitenden Führungselemente 4. Jedes Führungselement 4 besitzt den aus Fig. 5 deutlicher sichtbaren Aufbau. Jedes Führungselement 4 besitzt einen massiven die Stange 2 ohne Unterbrechung umgebenden Gehäusekasten 20, welcher von einer axialen Bohrung durchsetzt ist, in der ein handelsübliches Längskugellager 21 axial unverschiebbar und nicht drehbar angeordnet ist. Dieses Lager besitzt eine Mehrzahl von in sich geschlossenen Kugellaufrillen, wobei die zur inneren Oberfläche des Lagers 21 weisenden Kugellaufrillen so dimensioniert sind, daß die Kugeln 21a die innere Oberfläche geringfügig überragen und damit die Stange 2 als Wälzkörper tragen. Der Längskugellagerlaufring ist wie aus Fig. 5 ersichtlich nicht in sich geschlossen; er läßt oben vielmehr Platz für die Längsrippe 2a der Stange 2. Um ein genaues Anpassen des Längskugellagers 21 an den Durchmesser der Stange 2 zu gewährleisten, sind Druckkörper 24 in entsprechenden Bohrungen vorgesehen. Diese Druckkörper 24 können mittels Madenschrauben 25 von außen gegen den Lagerkörper 21 gedrückt werden, um so unter elastischer Verformung des letzteren eine optimale Anpassung der Längskugellagerführung an den Durchmesser der Stange 2 zu gewährleisten. In der Zeichnung ist nur die linke, aber nicht gleich ausgebildete rechte Druckkörperanordnung gezeigt.

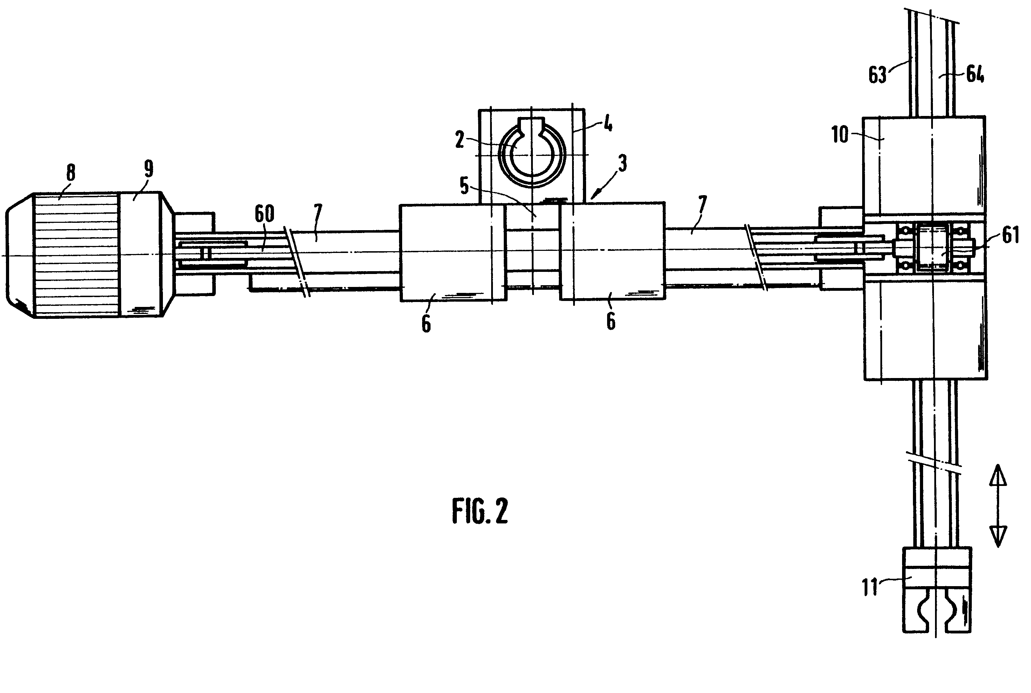

Wie aus Fig. 2 und 3 ersichtlich, sind die Führungselemente relativ kurz gehalten. Dadurch kann die Biegung der Stange 2 auf der Länge jedes Führungselements 4 vernachlässigt werden.

Zur reibungsarmen Drehsicherung der Verschiebeeinheit 4 auf der Stange 2 laufen wie aus der Zeichnung ersichtlich, Führungsrollen 14, die auf Exzenterbolzen 15 mittels Nadeln 13 gelagert sind, mit ihren Umfangsflächen an den seitlichen Flanken der Rippe 2a und fixieren so die Drehlage der Verschiebeeinheit 3 relativ zur Stange 2.

Jeder Exzenterbolzen 15 ist, wie aus der Zeichnung ersichtlich, mit seinem unteren Ende 15a in einer entsprechenden Bohrung des Gehäuses 20 gelagert. Mit seinem oberen Ende 15c, das einen Schlitz zur Verstellung mittels eines Schraubenziehers trägt, ist jeder Bolzen 15 in einem fest in eine entsprechend breite zur den Führungsbolzenteil 15a aufnehmenden Bohrung konzentrisch ausgebildeten Ausdrehung eingepreßten Ring 24 gelagert. In der Mitte trägt jeder Bolzen 15 einen Exzenter 15b, der um ein geringes Maß von beispielsweise 0,5 mm exzentrisch ist.

Durch Drehung der Bolzen 15 kann der Abstand der Rollen 14 von den Planken der Rippe 2a genau eingestellt und das Spiel hier auf angenähert Null gebracht werden. Um ein Drehen der Bolzen 15 unter dem Einfluß der auf die Rollen 14 wirkenden Stützkräfte zu vermeiden, können die Bolzen 15 beispielsweise mittels nicht gezeigter Madenschrauben nach Einjustierung von der Seite festgeklemmt werden.

Um die Verschiebeeinheit 3 auf der Stange 2 verschieben zu können, ist ein Elektromotor 30 vorgesehen, der über ein integriertes Planetengetriebs 31 ein auf der Abtriebswelle 32 des Getriebes sitzendes Ritzel 33 antreibt, welches mit der Zahnstange 16 der Rippe 2a kämmt. Auf diese Weise kann über entsprechende Betätigung des Elektromotors 30 die Verschiebeeinheit 4 längs der Stange 2 hin und her verschoben werden.

Der Elektromotor 30 mit dem Getriebe 31 ist an eine Schwinge 34 angeflanscht, welche aus zwei Flanschen 35 und einer diese Flanschen verbindenden Hülse 36 besteht. In der Schwinge 34 ist auch die Abtriebswelle 32 des Getriebes 31 gelagert (vgl. Fig. 4 unten).

Jedes der beiden Führungselemente 4 trägt, wie am besten aus Fig. 3 und 4 ersichtlich, auf jeder Seite zwei Bolzen 38. Die beiden Flanschen 35 der Schwinge 34 sind um die beiden miteinander fluchtenden Bolzen 38 des einen (in Fig. 4 rechten) Führungselements 4 schwenkbar gelagert. Die beiden Bolzen 38 am anderen Führungselement ragen in ein Langloch 40 der Schwinge, so daß bei entsprechender Durchbiegung der Stange 2 und damit auch der Brücke 5, welche einen Achsabstand der Bolzen 38 des einen Führungselements gegenüber den Bolzen 38 des anderen Führungselements bewirken, diese Achsabstandsänderung aufgenommen werden kann.

Wie aus Fig. 3 und 4 am besten ersichtlich, sind die beiden Führungselemente 6, in welchen die Querstange 7 geführt ist, ebenso wie die Führungselemente 4 aufgebaut und von der Brücke 5 getragen. Sie befinden sich lediglich insoweit in einer anderen Position, wie dies Fig. 3 und 4 zeigen. Die Querstange 7 besitzt ebenfalls den gleichen Aufbau wie die Stange 5 jedoch mit der Maßgabe, daß die Querstange 7 hohl ausgebildet ist und sich durch die Höhlung der Querstange 7 eine Antriebswelle 60 erstreckt.

Der Aufbau des unteren Teils der Verschiebeeinheit 3 ist daher im Einzelnen nicht näher beschrieben.

In Bezug auf die Stange 2 und die Querstange 7 ist noch darauf hinzuweisen, daß diese vorteilhaft von zusammendrückbaren Bälgen 40 umgeben und geschützt sind.

Wie weiter oben erwähnt, treibt die Abtriebswelle des Getriebes 9, die sich durch die Querstange 7 erstreckende Antriebswelle 60 für die Vertikalbewegung des Objektgreifers 11 an. Zu diesem Zweck treibt die Welle 60 ein am im Fig. 2 rechten Ende der Stange 7 sichtbares mit der Welle 60 drehfest verbundenes Ritzel 61 an. Das Ritzel 61 ist im Eingriff mit einer Zahnstange 62, die an einer Vertikalstange 63 sitzt und an ihrem unteren Ende den Vertikalgreifer 11 trägt. Die Vertikalstange 63 ist in einem Führungsgehäuse 10 geführt, dessen Aufbau keine Besonderheiten aufweist und daher nicht näher erläutert ist.

Um Schwenkbewegungen zu ermöglichen, kann das Führungsgehäuse 10 um die Achse der Stange 7 drehbar an letzterer angebracht sein. Ein zusätzlicher Stellmotor kann dann die gewünschte Drehlage des Gehäuses bestimmen. Auf diese Weise ist es möglich, mit relativ geringen Mitteln nicht nur den gesamten Flächenraum des Handhabungsgerätes zu überstreichen, sondern darüber hinaus auch noch die Schwenklage des gehaltenen Objektes beim Aufnehmen und Abgeben des letzteren willkürlich einzustellen. Besonders einfach wird die Konstruktion insoweit, wenn beispielsweise der Elektromotor 8 auch zum Schwenken des Gehäuses 10 verwendet wird. Zu diesem Zweck kann beispielsweise am in Fig. 2 rechten Ende eine Klauenkupplung sitzen, die wahlweise mit dem Ritzel 61 oder mit einem Mechanismus zum Schwenken des Gehäuses 10 in Eingriff bringbar ist.

Die Erfindung ist nicht auf die Handhabung von Werkstücken oder Werkzeugmaschinenteilen beschränkt. Sie kann allgemein verwendet werden beispielsweise auch für den Transport von Artilleriegeschoßen oder Einzelgebinden wie Ballonflaschen und was dergleichen mehr ist.

Wie insbesondere aus Fig. 1 ersichtlich, kann sich die Brücke 5 beim Durchbiegen der Stange 2 unter dem Gewicht der von ihr getragenen Elemente ebenfalls biegen, so daß die beiden Führungselemente 4 in einer Vertikalebene durch die Stange 2 unter einem geringen Winkel gegeneinander geneigt sind. Um diese Durchbiegung zu erleichtern, kann die im Ausführungsbeispiel gezeigte kreuzförmige Brücke 5 in den an den mittleren quadratischen Bereich dieser Brücke anschließenden Teilen wie bei 5b gezeigt gegenüber dem mittleren Bereich und auch gegenüber den Tragarmen 5a geschwächt sein, so daß sich trotz der versteifenden Wirkung der sich längs der Querstange 7 erstreckende Arm der Brücke 5 der mittlere quadratische Teil derselben ausreichend durchbiegen kann. Im übrigen können einer solchen Durchbiegung die querverlaufenden versteifenden Arme auch deswegen keinen wesentlichen Widerstand entgegensetzen, weil sie nicht ganzflächig mit den von ihnen getragenen Führungseinheiten 6 verbunden sind, sondern lediglich punktförmig und die entsprechende Durchwölbung der Brücke 5 im Sinne eines Abwölbens der außerhalb der Verbindungsschrauben liegenden Randbereiche der Tragarme 5a wirken.

In gleicher Weise läßt sich die Brücke unter der Durchbiegung der Querstange 7 nach unten durchbiegen, ohne daß es hier einer näheren Erläuterung bedarf.

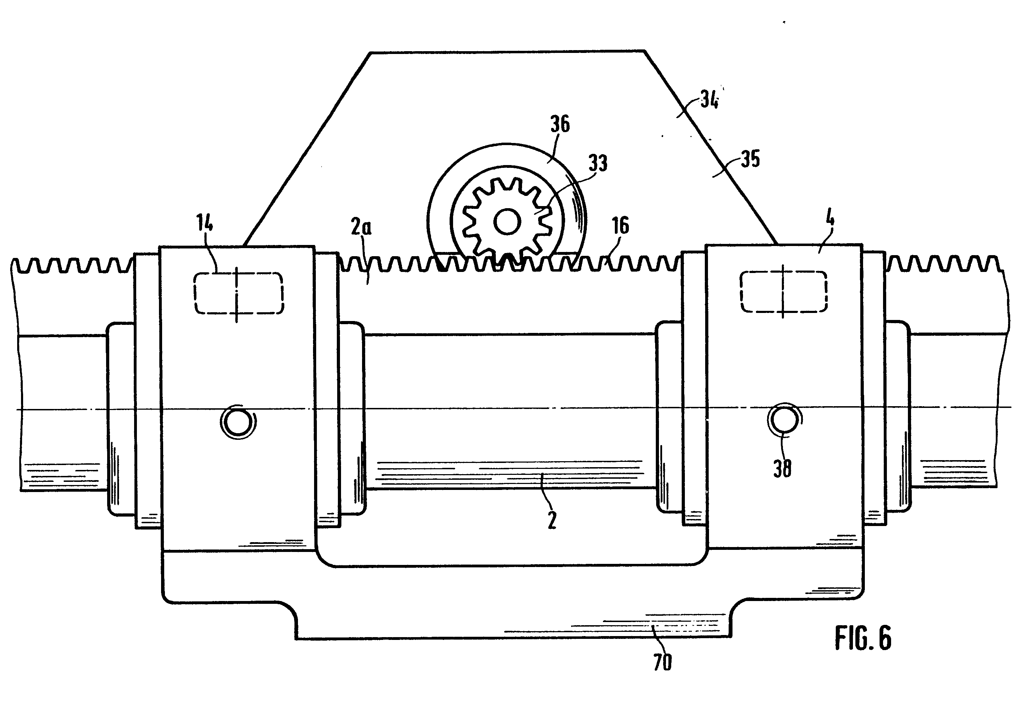

Ergänzend sei noch kurz auf das Prinzip der Brückenkonstruktion hingewiesen, wie dies am einfachsten und übersichtlichsten aus Fig. 6 ersichtlich ist. In Fig. 6 sieht man den einen Flansch 34 der Traverse 35, das Zwischenstück 36 der Traverse und im Zwischenstück das Ritzel 33, das mit der Zahnstange 16 der Rippe 2a der Stange kämmt. Die in diesem Ausführungsbeispiel als langgestrecktes Rechteck ausgebildete Brücke 70 trägt nahe ihren Enden zwei Längsführungselemente 4, die den Elementen 4 und 6 gemäß Fig. 1 bis 5 entsprechen. In den Längsführungselementen 4 sind die Führungsrollen 14 angedeutet. Man erkennt ferner die Zapfen 38, an welchen die Flansche 34 befestigt sind. Auch hier sieht man, daß bei einer Durchbiegung der Stange 2 die Brücke 70 der Durchbiegung folgen kann.

Die Biegsamkeit der Brücke kann bei kreuzförmiger Ausbildung auch dadurch erhöht werden, daß man die einspringenden Ecken derselben vertieft, indem man dort z.B. Ausnehmungen in Form von senkrecht zur Ebene der Brücke verlaufenden Bohrungen mit der einspringenden Ecke als Mittelpunkt vorsieht.

## Patentansprüche

1. Handhabungsgerät für zu fördernde und/oder zu positionierende Objekte mit einer einseitig starr oder beidseitig eingespannten vorzugsweise horizontalen Stange (2), auf welcher eine die Stange (2) umgreifende Verschiebeeinheit (3) nicht drehbar aber verschiebbar ist, wobei eine Aufnahme (11) für das Objekt von der Verschiebeeinheit (3) mittelbar oder unmittelbar getragen ist, dadurch gekennzeichnet, daß die Biegesteifigkeit der Stange (2) so gering bemessen ist, daß die Betriebsbelastungen zu erheblichen, aber noch in einem ausreichenden Zeitstandfestigkeitsbereich liegenden Verformungen führen, daß die Verschiebeeinheit (3) zwei axial im Abstand voneinander unverdrehbar auf der Stange (2) geführte Führungselemente (4) aufweist, die mit Längswälzlagern (21) auf der Stange (2) laufen, und daß diese Führungselemente (4) mittels einer biegeweichen ein angenähertes Anpassen der Flucht der Führungselemente (4) an die Durchbiegung der Stange (2) unter Betriebsbelastung erlaubenden Brücke (5) verbunden sind.

2. Handhabungsgerät nach Anspruch 1, bei welcher die Aufnahme (11) von einer quer zur Stange (2) verfahrbar durch die Verschiebeeinheit (3) getragenen Querstange (7) getragen ist, dadurch gekennzeichnet, daß die Biegefestigkeit der Querstange (7) so gering bemessen ist, daß die Betriebsbelastungen zu erheblichen, aber noch in einem ausreichenden Zeitstandfestigkeitsbereich liegenden Verformungen führen, daß die Verschiebeeinheit (3) zwei weitere die Querstange (7) nicht drehbar führende, in Bezug auf diese axial im Abstand angeordnete Führungselemente (6) aufweist, die mit Längswälzlagern auf der Querstange (7) laufen, und daß auch diese Führungselemente (6) mittels einer biegeweichen ein angenähertes Anpassen der Flucht der Führungselemente (6) an die Durchbiegung der Querstange (7) unter Betriebsbelastung erlaubenden Brücke (5) verbunden sind.

3. Handhabungsgerät nach Anspruch 1 oder 2, dadurch gekennzeichnet, daß die Brücke (5) der Verschiebeeinheit (3) eine Vertikalführung für die Aufnahme trägt bzw. zugleich die Brücke für die Führungselemente der Querstange (7) bildet.

4. Handhabungsgerät nach Anspruch 1, 2 oder 3, dadurch gekennzeichnet, daß die Brücke (5) als ebene - vorzugsweise parallel zur Stange (2) angeordnete - Platte ausgebildet ist.

5. Handhabungsgerät nach einem der Ansprüche 1 bis 4, dadurch gekennzeichnet, daß von der Brücke (5) die Führungselemente tragenden Arme (5a) abragen.

6. Handhabungsgerät nach Anspruch 5, dadurch gekennzeichnet, daß die Arme (5a) den Umriß der Brücke (5) zu einem langgestreckten Rechteck bzw. einem Kreuz ergänzen.

7. Handhabungsgerät nach einem der Ansprüche 1 bis 6, dadurch gekennzeichnet, daß die Führungselemente (4, 6) jeweils einen die Stange (2) bzw. Querstange (7) ringförmig umgebenden aus einem Stück bestehenden Grundkörper (20) (Fig. 5) aufweisen, welcher die Längswälzlager (21) trägt.

8. Handhabungsgerät nach Anspruch 7, dadurch gekennzeichnet, daß die Stange (2) und gegebenenfalls die Querstange (7) Kreisprofil mit einer Längsrippe (2a) aufweisen, daß die Längswälzlager (21) auf dem Kreisprofil laufen und daß Längswälzlager - oder vorzugsweise wälzgelagerte Rollen (14) - an den Flanken der Rippe (2a) laufen.

9. Handhabungsgerät nach Anspruch 8, dadurch gekennzeichnet, daß die wälzgelagerten Rollen (14) in Aussenkungen der Längsführungen (4, 6) laufen, daß die Achsen (15) der Rollen (14) einenends in entsprechenden Bohrungen am Grund der Aussenkungen und anderenends in konzentrisch zu diesen Bohrungen in entsprechenden Schultern der Aussenkungen sitzenden Ringen (24) geführt sind, und daß die Achsen (15) dreheinstellbar sind und Exzenter (15b) tragen, auf denen die Rollen (14) gelagert sind.

10. Handhabungsgerät nach Anspruch 9, dadurch gekennzeichnet, daß die Achsen (15) der Rollen (14) in der eingestellten Drehlage arretierbar sind.

11. Handhabungsgerät nach einem der Ansprüche 1 bis 10, dadurch gekennzeichnet, daß die Verschiebeeinheit (3) für die Stange (2) und gegebenenfalls die Querstange (7) jeweils einen mit einem Untersetzungsgetriebe (31) versehenen Elektromotor (30) trägt, und daß das Untersetzungsgetriebe (31) jeweils ein Ritzel (33) antreibt, das im Eingriff mit einer Zahnstangenverzahnung (16) der Stange (2) bzw. Querstange (7) ist und die Verschiebebewegung der Verschiebeeinheit (3) bzw. der Querstange (7) bewirkt.

12. Handhabungsgerät nach Anspruch 11, dadurch gekennzeichnet, daß das Untersetzungsgetriebe (31) ein mit dem Motor zusammengeflanschtes Planetengetriebe ist.

13. Handhabungsgerät nach Anspruch 8 und einem der Ansprüche 11 und 12, dadurch gekennzeichnet, daß die Zahnstange (16) auf der dem Kreisprofil abgewandten Seite der Rippe (2a) vorgesehen ist.

14. Handhabungsgerät nach einem der Ansprüche 11 bis 13, dadurch gekennzeichnet, daß das vom Motor (30), Getriebe (31) und Ritzel (33) gebildete Antriebsaggregat von einer Traverse (34) getragen ist, die jeweils an einem Führungselement (4, 6) fest und am anderen Führungselement (4, 6) verschiebbar angebracht ist.

15. Handhabungsgerät nach einem der Ansprüche 1 bis 14, dadurch gekennzeichnet, daß die Längswälzlager (21) von einem gesonderten in das jeweilige Längsführungselement (4, 6) eingesetzten Lagerkörper (21) mit Kugellaufkanälen gebildet sind, und daß die Lagerkörper (21) mittels Klemmschrauben (25) fein-einstellbar sind.

16. Handhabungsgerät nach einem der Ansprüche 1 bis 15, dadurch gekennzeichnet, daß die Querstange (7) hohl ausgebildet ist, daß an einem Ende derselben ein mit einem Untersetzungsgetriebe (9) versehener elektrischer Antriebsmotor (8) vorgesehen ist, dessen Antriebswelle (60) durch die Querstange (7) zu deren anderem Ende ragt, daß am anderen Ende der Querstange (7) die Objektaufnahme (11) vertikal verschiebbar gelagert ist, und daß ein Ritzel (61) am Ende der Abtriebswelle (60) zum Vertikalbewegen der Objektaufnahme mit einer Zahnstange (64) an letzterer zusammenwirkt.

## Claims

1. Handling equipment for objects to be conveyed and/or positioned, having a preferably horizontal bar (2) which is rigidly gripped at one side or gripped at both sides and on which a displacement unit (3), engaging round the bar (2), is displaceable but not rotatable, and a receiver (11) for the object is carried indirectly or directly by the displacement unit, characterised in that the flexural rigidity of the bar (2) is rated so low that the operating loads lead to considerable deformation which, however, still lies within an adequate creep strength range depending on time, that the displacement unit (3) comprises two guide elements (4) which are guided axially, spaced apart, and non-rotatably on the bar (2) and which run with longitudinal rolling bearings (21) on the bar (2), and that these guide elements (4) are connected by means of a flexible bridge (5) which permits an approximate adaptation of the alignment of the guide elements (4) to the bending of the bar (2) under operational loading.

2. Handling equipment as claimed in Claim 1, wherein the receiver (11) is carried by a transverse bar (7) which can travel transversely to the bar (2) and is carried by the displacement unit (3), characterised in that the flexural rigidity of the transverse bar (7) is rated so low that the operating loads lead to considerable deformation which, however, still lies within an adequate creep strength range depending on time, that the displacement unit (3) comprises two further guide elements (6) which guide the transverse bar (7) in a non-rotatable manner and are arranged axially, with spacing, with respect to this and which run with longitudinal rolling bearings on the transverse bar (7) and that these guide elements (6) are also connected by means of a flexible bridge (5) permitting an approximate adaptation of the alignment of the guide elements (6) to the bending of the transverse bar (7) under operational loading.

3. Handling equipment as claimed in Claim 1 or 2, characterised in that the bridge (5) of the displacement unit (3) carries a vertical guide for the receiver and/or simultaneously forms the bridge for the guide elements of the transverse bar (7).

4. Handling equipment as claimed in Claims 1, 2 or 3, characterised in that the bridge (5) is constructed in the form of a plane plate preferably arranged parallel to the bar (2).

5. Handling equipment as claimed in one of the Claims 1 to 4, characterised in that arms (5a) carrying the guide elements project down from the bridge (5).

6. Handling equipment as claimed in Claim 5, characterised in that the arms (5a) complete the outline of the bridge (5) to form an elongated rectangle or a cross.

7. Handling equipment as claimed in one of the Claims 1 to 6, characterised in that the guide elements (4, 6) each comprise a basic body (20 (Figure 5)) which surrounds the bar (2) or transverse bar (7) annularly and consists of one piece and which carries the longtudinal rolling bearing (21).

8. Handling equipment as claimed in Claim 7, characterised in that the bar (2) and possibly the transverse bar (7) have a circular section with a longitudinal rib (2a), that the longitudinal rolling bearings (21) run on the circular section and that longitudinal rolling bearings - or preferably rollers (14) mounted on rolling bearings - run on the flanks of the rib (2a).

9. Handling equipment as claimed in Claim 8, characterised in that the rollers (14) mounted on rolling bearings run in recesses in the longitudinal guides (4, 6), that the spindles (15) of the rollers (14) are guided at one end in corresponding bores at the bottom of the recesses and at the other end in rings (24) seated, concentrically with these bores, in corresponding shoulders of the recesses, and that the spindles (15) are rotationally adjustable and carry eccentrics (15b) on which the rollers (14) are mounted.

10. Handling equipment as claimed in Claim 9, characterised in that the spindles (15) of the rollers (14) can be locked in the set rotational position.

11. Handling equipment as claimed in one of the Claims 1 to 10, characterised in that the displacement unit (3) carries an electric motor (30) provided with a reduction gear (31) for the bar (2) and possibly one for the transverse bar (7), and that each reduction gear (31) drives a pinion (33) which is in mesh with rack teeth (16) of the bar (2) or transverse bar (7) and causes the displacement movement of the displacement unit (3) or of the transverse bar (7).

12. Handling equipment as claimed in Claim 11, characterised in that the reduction gear (31) is an epicyclic gear flange connected to the motor.

13. Handling equipment as claimed in Claim 8 and one of the Claims 11 and 12, characterised in that the rack (16) is provided on the side of the rib (2a) remote from the circular section.

14. Handling equipment as claimed in one of the Claims 11 to 13, characterised in that the drive unit formed by the motor (30), gear (31) and pinion (33) is carried by a traverse (34) which is rigidly mounted on one guide element (4, 6) and displaceably mounted on the other guide element (4, 6) in each case.

15. Handling equipment as claimed in one of the Claims 1 to 14, characterised in that the longtudinal rolling bearings (21) are formed by a separate bearing body (21) which is inserted in the particular longitudinal guide element (4, 6) and has ball race channels and that the bearing bodies (21) can be finely adjusted by means of setscrews (25).

16. Handling equipment as claimed in one of the Claims 1 to 15, characterised in that the transverse bar (7) is hollow in construction that provided at one end thereof is an electric drive motor (8) which is provided with a reduction gear (9) and the driving shaft (60) of which projects through the transverse bar (7) to the other end thereof, that the object receiver (11) is mounted for vertical displacement on the other end of the transverse bar (7) and that a pinion (61) at the end of the driving shaft (60) cooperates with a rack (64) on the object receiver for the vertical movement of the latter.

**Revendications**

1. Dispositif de maniement pour des objets à transporter et/ou à positionner, avec une barre (2), de préférence horizontale, fixée de manière rigide à une ou aux deux extrémités et sur laquelle est montée de façon rigide en rotation mais mobile dans le sens axial une unité de translation (3) qui entoure la barre (2), une fixation (11) pour l'objet étant portée indirectement ou directement par l'unité de translation (3), caractérisé en ce que la résistance à la flexion de la barre (2) est tellement faible que les poids en charge conduisent à des déformations considérables qui se situent néanmoins encore à l'intérieur d'un domaine de résistance au fluage suffisant; que l'unité de translation (3) comprend deux éléments de guidage (4) guidés axialement à distance l'un de l'autre et de manière rigide en rotation sur la barre (2), lesdits éléments de guidage se déplaçant sur la barre (2) par l'intermédiaire de paliers de butée (21); et que ces éléments de guidage (4) sont reliés par un pont (5) flexible permettant, en charge, une adaptation approximative de l'alignement des éléments de guidage (4) au fléchissement de la barre (2).

2. Dispositif de maniement selon la revendication 1, dans lequel la fixation (11) est supportée par une barre transversale (7) qui est portée par l'unité de translation (3) de façon à pouvoir être déplacée transversalement par rapport à la barre (2), caractérisé en ce que la résistance à la flexion de la barre (7) est choisie tellement faible que les poids en charge conduisent à des déformations considérables qui se situent néanmoins encore à l'intérieur d'un domaine de résistance au fluage suffisant; que l'unité de translation (3) comprend deux autres éléments de guidage (6) qui guident, de manière rigide en rotation, la barre transversale (7) par rapport à laquelle ils sont disposés axialement, à distance l'un de l'autre, et qui coulissant sur la barre transversale (7) par l'intermédiaire de paliers de butée; et que ces éléments de guidage (6) aussi sont reliés par un pont (5) flexible permettant, en charge, une adaption approximative de l'alignement des éléments de guidage (6) au fléchissement de la barre transversale (7).

3. Dispositif de maniement selon l'une des revendications 1 ou 2, caractérisé en ce que le pont (5) de l'unité de translation (3) porte un guidage vertical pour la fixation et, respectivement, qu'il constitue en même temps le pont pour les éléments de guidage de la barre transversale (7).

4. Dispositif de maniement selon l'une quelconque des revendications 1 à 3, caractérisé en ce que le pont (5) est conformé en plaque plane - disposée, de préférence, parallèlement à la barre (2).

5. Dispositif de maniement selon l'une quelconque des revendications 1 à 4, caractérisé en ce que des bras de support (5a) qui portent les éléments de guidage dépassent du pont (5).

6. Dispositif de maniement selon la revendication 5, caractérisé en ce que les bras (5a) complètent le contour du pont (5) en un rectangle allongé et respectivement en une croix.

7. Dispositif de maniement selon l'une quelconque des revendications 1 à 6, caractérisé en ce que les éléments de guidage (4, 6) comportent respectivement un corps de base (20) (fig. 5) réalisé en une seule pièce, qui entoure la barre (2) et respectivement la barre transversale (7) en forme de bague et qui porte les paliers de butée (21).

8. Dispositif de maniement selon la revendication 7, caractérisé en ce que la barre (2) et, le cas échéant, la barre transversale (7) présentent un profil circulaire avec une nervure longitudinale (2a), que les paliers de butée (21) coulissent sur le profil circulaire, et que des paliers de butée - ou de préférence des rouleaux (14) montés sur paliers à roulement - tournent sur les flancs de la nervure (2a).

9. Dispositif de maniement selon la revendication 8, caractérisé en ce que les rouleaux (14) montés sur paliers à roulement tournent dans des évidements prévus dans les éléments de guidage longitudinaux (4, 6), que les axes (15) des rouleaux (14) sont guidés, à l'une de leurs extrémités, dans des alésages correspondants au fond des évidements et, à l'autre extrémité, dans des bagues (24) disposées concentriquement par rapport à ces alésages dans des épaulements correspondants des évidements, et que les axes (15) sont réglables en rotation et portent des excentriques (15b) sur lesquels sont montés les rouleaux (14).

10. Dispositif de maniement selon la revendication 9, caractérisé en ce que les axes (15) des rouleaux (14) peuvent être bloqués dans la position de rotation réglée.

11. Dispositif de maniement selon l'une quelconque des revendications 1 à 10, caractérisé en ce que l'unité de translation (3) pour la barre (2) et, le cas échéant, la barre transversale (7) portent chacune un moteur électrique (30) muni d'un démultiplicateur (31), et que le démultiplicateur (31) entraîne à chaque fois un pignon (33) lequel coopère avec une denture de crémaillère (16) de la barre (2) et respectivement de la barre transversale (7) et provoque le mouvement de translation de l'unité de translation (3) et respectivement de la barre transversale (7).

12. Dispositif de maniement selon la revendication 11, caractérisé en ce que la démutiplicateur (31) est un engrenage planétaire bridé au moteur.

13. Dispositif de maniement selon la revendication 8 et selon l'une des revendications 11 et 12, caractérisé en ce que la crémaillère (16) est prévue du côté de la nervure (2a) opposé au profil circulaire.

14. Dispositif de maniement selon l'une quelconque des revendications 11 à 13, caractérisé en ce que le groupe moteur constitué par le moteur (30), l'engrenage (31) et le pignon (33) est porté par une traverse (34) qui est montée respectivement de manière rigide sur l'un des éléments de guidage (4, 6) et de manière mobile sur l'autre élément de guidage (4, 6).

15. Dispositif de maniement selon l'une quelconque des revendications 1 à 14, caractérisé en ce que les paliers de butée (21) sont constitués par un corps de palier séparé (21) avec des gorges à billes, engagé dans l'élément de guidage longitudinal (4, 6) respectif, et que les corps de palier (21) peuvent être réglés de manière précise au moyen de vis de serrage (25).

16. Dispositif de maniement selon l'une quelconque des revendications 1 à 15, caractérisé en ce que la barre transversale (7) est creuse, qu'il est prévu à l'une des extrémités de celle-ci un moteur électrique d'entraînement (8) muni d'un démultiplicateur (9), dont l'arbre moteur (60) traverse la barre transversale (7) jusqu'à l'autre extrémité de celle-ci, que la fixation d'objet (11) est montée à l'autre extrémité de la barre transversale (7) de façon à pouvoir être déplacée dans le sens vertical, et qu'un pignon (61) monté à l'extrémité de l'arbre mené (60) coopère avec une crémaillère (64) montée sur ce dernier pour réaliser le mouvement vertical de la fixation d'objet.

FIG. 1

FIG. 2

FIG. 3

FIG. 4

FIG. 5

FIG. 6

0 139 781